# FASCICULE DE BREVET EUROPEEN

(11) **EP 3 595 930 B1**
(45) Date de publication et mention de la délivrance du brevet: **09.10.2024**
(21) Numéro de dépôt: 18710466.6
(22) Date de dépôt: 12.03.2018
(51) Int. Cl.: B60Q 5/00, H01H 3/12

(54) **DISPOSITIF DE COMMANDE D'AVERTISSEUR SONORE DE VEHICULE**
FAHRZEUGHUPENSTEUERUNGSVORRICHTUNG
VEHICLE HORN CONTROL DEVICE

(30) Priorité: 14.03.2017 FR 1752051
(43) Date de publication de la demande: 22.01.2020
(73) Titulaire: Autoliv Development AB, 447 83 Vårgårda (SE)
(72) Inventeur: GROLEAU, Laurent, 86190 Quincay (FR)
(74) Mandataire: Vigand, Philippe
(86) Numéro de dépôt international: PCT/EP2018/056085
(87) Numéro de publication internationale: WO 2018/166974

(56) Documents cités:
- DE-A1- 102006 016 160
- DE-U1- 202015 009 031
- JP-A- 2008 146 980
- KR-A- 20080 093 632
- US-A- 4 210 905

## Description

La présente invention concerne de manière générale un dispositif de commande d'avertisseur sonore de véhicule automobile.

Il est connu dans l'art antérieur des dispositifs de commande d'avertisseur sonore, autrement appelés klaxon. Le document US6119545 décrit par exemple un dispositif de commande intégré dans un module de sécurité de volant, avec un interrupteur qui change d'état lorsque l'utilisateur enfonce une pièce de commande. En contrepartie, ce système présente notamment l'inconvénient de nécessiter une course de commande importante, ainsi que de nombreux composants pour guider, mettre en butée, c'est-à-dire positionner les pièces mobiles du dispositif de commande. Il faut aussi prévoir des moyens de rappel élastiques pour ramener les pièces mobiles en position de repos, et en raison de la course importante et des vibrations présentes, il est difficile de concilier une dureté adéquate pour limiter les vibrations tout en procurant une commande aisée. le document KR20080093632A se rapporte à un dispositif d'avertisseur sonore prévu pour générer rapidement un bruit d'avertissement.

Un but de la présente invention est de répondre aux inconvénients des documents de l'art antérieur mentionnés ci-dessus et en particulier, tout d'abord, de proposer un dispositif de commande d'avertisseur sonore qui présente une architecture simple, tout en présentant une détection de commande rapide. A cet effet, l'invention est définie par la revendication 1.

Pour cela un premier aspect de l'invention concerne un dispositif de commande d'avertisseur sonore de véhicule, embarqué, ou agencé pour être embarqué sur un volant du véhicule, comprenant :
- une pièce de base,
- une pièce de commande, mobile par rapport à la pièce de base entre une position de repos et une position enfoncée,
- des moyens de rappel élastiques, agencés pour repousser la pièce de commande depuis la position enfoncée vers la position de repos,
- des moyens de positionnement, agencés pour imposer la position de repos à la pièce de commande,
- un circuit électrique avec au moins un interrupteur comprenant une deuxième borne de contact, embarquée sur la pièce de commande, et une première borne de contact, solidaire de la pièce de base,
et notamment tel que les moyens de positionnement comprennent la première borne de contact qui est agencée pour positionner la pièce de commande en position de repos, de sorte à fermer l'interrupteur lorsque la pièce de commande est en position de repos.

Le dispositif de commande selon la mise en oeuvre ci-dessus présente une architecture simple, puisque l'interrupteur est partiellement intégré dans les moyens de positionnement. Un tel cumul des fonctions sur des mêmes pièces permet de limiter le nombre de composants. De plus, l'interrupteur est fermé lorsque la pièce de commande est en position de repos, il en résulte que le dispositif détecte une ouverture de l'interrupteur, qui intervient au tout début du déplacement de la pièce de commande, permettant ainsi une détection rapide de la commande. Cela permet également de limiter la course de commande et permet de limiter les jeux visibles entre les pièces fixes et mobiles.

La pièce de base étant agencée pour être fixée sur le volant, on peut considérer que cette pièce est une pièce de référence ou même une pièce "statique", si bien que la première borne de contact peut être appelée une borne de contact de référence ou borne de contact statique puisqu'elle est solidaire de la pièce de base. De plus, la deuxième borne de contact, puisqu'elle est solidaire de la pièce de commande qui est mobile relativement à la pièce de base, peut être appelée borne de contact mobile.

Selon l'invention, les moyens de positionnement sont des moyens de butée comprenant la première borne de contact qui est agencée pour former une butée mécanique à la pièce de commande rappelée en position de repos par les moyens de rappel. De tels moyens de butée assurent à la pièce de commande un positionnement répétable en position de repos.

En d'autres termes, selon une mise en oeuvre, l'invention concerne un dispositif de commande d'avertisseur sonore de véhicule, embarqué, ou agencé pour être embarqué sur un volant du véhicule, comprenant notamment :
- une pièce de base,
- une pièce de commande, mobile par rapport à la pièce de base entre une position de repos et une position enfoncée,
- des moyens de rappel élastiques, agencés pour repousser la pièce de commande depuis la position enfoncée vers la position de repos,
- des moyens de butée, agencés pour imposer la position de repos à la pièce de commande,
- un circuit électrique avec au moins un interrupteur comprenant une deuxième borne de contact, embarquée sur la pièce de commande, et une première borne de contact, solidaire de la pièce de base,
caractérisé en ce que les moyens de butée comprennent la première borne de contact agencée pour entrer en butée mécanique avec la pièce de commande en position de repos, de sorte à fermer l'interrupteur lorsque la pièce de commande est en position de repos.

Selon l'invention, les moyens de butée comprennent des moyens de guidage de la pièce de commande.

Avantageusement, la deuxième borne de contact entre en butée mécanique avec la première borne de contact lorsque la pièce de commande est en position de repos.

Avantageusement, les moyens de positionnement sont des moyens de guidage dans lesquels :
- l'une de la première borne de contact ou de la deuxième borne de contact forme ou fait partie d'une coulisse et
- l'autre de la première borne de contact ou de la deuxième borne de contact forme ou fait partie d'un coulisseau,
de sorte à guider la pièce de commande rappelée en position de repos par les moyens de rappel.

Avantageusement:
- la coulisse comprend une portion conductrice de l'électricité, et une portion isolante de l'électricité,
- le coulisseau est formé par une pièce femelle agencée au moins partiellement autour de la coulisse.

Avantageusement, ladite portion conductrice de l'électricité est une portion extrémale de la tige, contactée par le coulisseau lorsque la pièce de commande est en position de repos.

Selon l'invention, les moyens de butée comprennent une tige formant la première borne de contact, (ou selon une mise en oeuvre non couverte par l'invention revendiquée, la deuxième borne de contact), et conductrice de l'électricité et qui fait partie du circuit électrique. La tige elle-même fait partie du circuit électrique, ainsi que la surface de contact de la première borne de contact. Selon l'invention, la tige est épaulée, et/ou est une vis épaulée, et l'épaulement de la tige forme une butée mécanique.

Avantageusement, la pièce de base est en matériau conducteur de l'électricité et fait partie du circuit électrique. L'intégration de la pièce de base dans le circuit électrique permet de simplifier le câblage.

Avantageusement, la tige est fixée sur la pièce de base.

Avantageusement, la pièce de base est isolée ou agencée pour être isolée électriquement de la masse du véhicule
Selon une mise en oeuvre non couverte par l'invention revendiquée, les moyens de butée comprennent une tige épaulée, conductrice de l'électricité, dans lequel la première borne de contact est fixée sur la tige épaulée, le dispositif comprenant des moyens d'isolation électrique agencés entre la tige et la première borne de contact.

Selon une mise en oeuvre non couverte par l'invention revendiquée, les moyens d'isolation sont une rondelle isolante, et dans lequel la première borne de contact est une rondelle métallique fixée sur la rondelle isolante.

Selon une mise en oeuvre non couverte par l'invention revendiquée, les moyens d'isolation sont une rondelle isolante, dans lequel l'une de la première borne de contact ou de la deuxième borne de contact comprend deux pistes électriques formées sur la rondelle isolante, et dans lequel l'autre de la première borne de contact ou de la deuxième borne de contact est une pièce conductrice de la pièce de commande, agencée pour contacter les deux pistes électriques lorsque la pièce de commande est en position de repos.

Selon une mise en oeuvre non couverte par l'invention revendiquée, les moyens de positionnement comprennent une pièce d'isolation, isolante de l'électricité, dans lequel l'une de la première borne de contact ou de la deuxième borne de contact est une portion métallique formée sur la pièce d'isolation, et dans lequel l'autre de la première borne de contact ou de la deuxième borne de contact est une pièce conductrice, agencée pour contacter la portion métallique lorsque la pièce de commande est en position de repos.

Selon une mise en oeuvre non couverte par l'invention revendiquée, les moyens d'isolation sont une rondelle isolante, et la première borne de contact est une rondelle métallique fixée sur la rondelle isolante.

Selon une mise en oeuvre non couverte par l'invention revendiquée, les moyens de positionnement comprennent une pièce d'isolation, isolante de l'électricité, l'une de la première borne de contact ou de la deuxième borne de contact comprend deux pistes électriques formées sur la pièce d'isolation, et l'autre de la première borne de contact ou de la deuxième borne de contact est une pièce conductrice, agencée pour contacter les deux pistes électriques lorsque la pièce de commande est en position de repos.

Avantageusement, le circuit électrique comprend au moins un boîtier électronique agencé pour détecter une ouverture de l'interrupteur lorsque la pièce de commande quitte la position de repos.

Avantageusement, le dispositif de commande comprend une pluralité d'interrupteurs ayant chacun une première borne de contact et une deuxième borne de contact,
dans lequel les moyens de positionnement comprennent une pluralité d'unités
de positionnement,
dans lequel chaque unité de positionnement comprend une des premières bornes de contact.

Avantageusement, le dispositif de commande comprend une pluralité de circuits électriques comprenant chacun un desdits interrupteurs et un boîtier électronique agencé pour détecter une ouverture de l'interrupteur.

Avantageusement, la pièce de commande est une pièce conductrice d'électricité surmoulée. Ainsi, la pièce commande peut faire partie du circuit électrique et le surmoulage peut être utilisé pour assurer une bonne interface entre la pièce de commande et les moyens de positionnement.

Avantageusement, une course de la pièce de commande entre la position de repos et la position enfoncée est inférieure à 1 mm.

Avantageusement, les moyens élastiques sont agencés pour exercer un effort de rappel supérieur à 20N.

Avantageusement, la pièce de base est une armature du volant.

Selon l'invention, la pièce de commande est une pièce support agencée pour recevoir un module de sécurité. Ainsi, les éléments de positionnement peuvent aussi participer à la retenue du module de sécurité lors de son déclanchement ce qui permet de réduire le nombre de composants et rend le dispositif plus compact.

Selon l'invention, la pièce de commande est un couvercle ou un capot de module de sécurité.

Avantageusement, le dispositif comprend des moyens d'amortissement agencés entre la pièce de commande et une partie de guidage, pour absorber des vibrations, et/ou pour procurer un jeu de montage. Typiquement, les moyens d'amortissement sont un silentbloc inséré entre un surmoulage (de la pièce de commande par exemple) et une douille de guidage.

Un deuxième aspect de l'invention concerne un volant de véhicule comprenant un dispositif de commande selon le premier aspect de l'invention.

Avantageusement, le volant comprend un module de sécurité, monté sur la pièce de commande. Il faut prévoir un montage robuste qui doit résister au poids du module de sécurité, avec des moyens de positionnement qui guident correctement un tel ensemble (d'un poids supérieur à plusieurs centaines de grammes). De plus, lors du déploiement, la pièce de commande et les moyens de positionnement doivent aussi résister aux grandes contraintes imposées par le dépliage rapide du coussin de sécurité. En particulier, la pièce de commande est une plaque métallique d'une épaisseur comprise entre 0.5 mm et 2 mm.

Un troisième aspect de l'invention concerne un véhicule automobile comprenant un volant de véhicule selon le deuxième aspect de l'invention.

D'autres caractéristiques et avantages de la présente invention apparaîtront plus clairement à la lecture de la description détaillée qui suit de plusieurs modes de réalisation de l'invention donnés à titre d'exemples nullement limitatifs et illustrés par les dessins annexés, dans lesquels :
- la figure 1 représente un premier mode de réalisation d'un dispositif de commande d'avertisseur sonore, dans une position de repos ;
- la figure 2 représente le dispositif de commande de la figure 1 dans une position enfoncée ;
- la figure 3 représente un deuxième mode de réalisation non couvert par l'invention revendiquée d'un dispositif de commande d'avertisseur sonore, dans une position de repos ;
- la figure 4 représente le dispositif de commande de la figure 3 non couvert par l'invention revendiquée dans une position enfoncée ;
- la figure 5 représente un troisième mode de réalisation d'un dispositif de commande d'avertisseur sonore non couvert par l'invention revendiquée, dans une position de repos ;
- la figure 6 représente le dispositif de commande de la figure 5 non couvert par l'invention revendiquée dans une position enfoncée ;
- la figure 7 représente un détail du dispositif de commande de la figure 5 non couvert par l'invention revendiquée;
- la figure 8 représente une vue éclatée du dispositif de commande de la figure 1 ;
- la figure 9 représente une vue détaillée d'un composant du dispositif de commande de la figure 1;
- la figure 10 représente un quatrième mode de réalisation d'un dispositif de commande d'avertisseur sonore non couvert par l'invention revendiquée, dans une position de repos ;
- la figure 11 représente le dispositif de commande non couvert par l'invention revendiquée de la figure 10 dans une position enfoncée ;

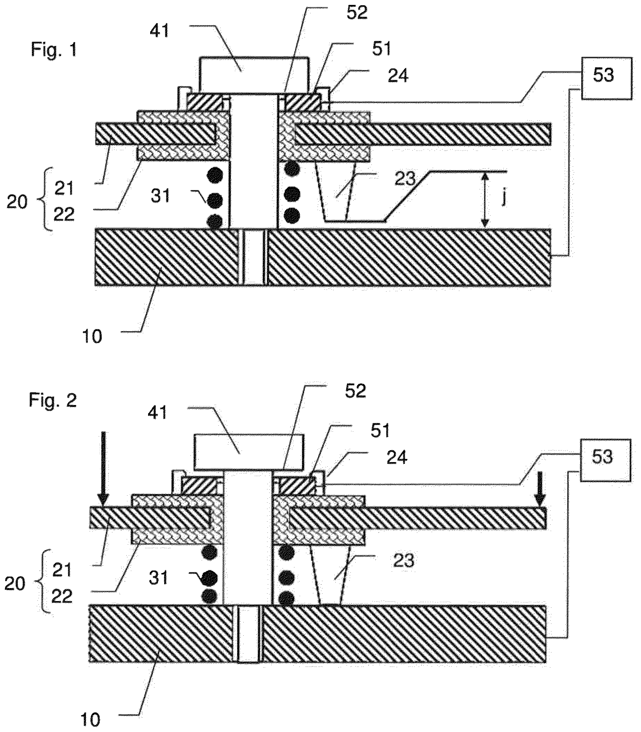

La figure 1 représente un dispositif de commande de klaxon monté sur un volant, selon un premier mode de réalisation de l'invention, et qui comprend :
- une armature 10 du volant, formant une pièce de base,
- une vis épaulée 41, fixée sur l'armature 10,
- une platine 20 comprenant une plaque 21 avec un surmoulage 22, guidée par une partie cylindrique de la vis épaulée,
- une rondelle 51, embarquée sur la platine 20 car elle est tenue par des crochets 24 du surmoulage 22,
- un ressort 31 formant des moyens de rappel et prenant appui sur l'armature 10 pour repousser la rondelle 51 de la platine 20 contre l'épaulement de la vis épaulée 41.

La platine 20 est donc repoussée vers le haut de la figure 1 par le ressort 31, elle est donc en position de repos, et la platine 20 peut coulisser le long de la vis épaulée 41 pour atteindre une position enfoncée, comme le montre la figure 2. La platine 20 forme donc une pièce de commande qui peut être poussée de la position de repos de la figure 1 vers la position enfoncée de la figure 2 par un utilisateur lorsqu'il veut klaxonner. Un plot 23 forme une butée de fin de course en venant en appui sur l'armature 10.

Autrement dit, la vis épaulée 41 avec la rondelle 51 forment des moyens de positionnement et en particulier des moyens de butée, pour positionner la platine 20 en position de repos, car elle y est repoussée par le ressort 31.

Typiquement, la platine 20 embarque un module de sécurité (un airbag) et c'est sur ce dernier que l'utilisateur appuie pour actionner l'avertisseur sonore. Le module de sécurité est donc embarqué sur la platine 20 et mobile par rapport à l'armature du volant. Cependant, la pièce de commande peut être uniquement un couvercle ou un capot du module de sécurité dans un autre mode de réalisation.

Pour détecter le mouvement de la platine, l'invention propose de former un interrupteur électrique avec la rondelle 51 qui forme une deuxième borne de contact, et une surface 52 de l'épaulement de la vis épaulée 41, qui forme alors une première borne de contact.

Un circuit électrique est alors formé par :
- l'armature 10,
- la vis épaulée 41,
- la première borne de contact (la surface 52),
- la deuxième borne de contact (la rondelle 51),
- un boîtier électronique 53 relié d'une part à l'armature 10 et d'autre part à la rondelle 51, et qui est agencé pour détecter l'ouverture du circuit électrique, c'est-à-dire le moment où la rondelle 51 n'est plus en contact physique et/ou électrique avec la surface 52.

Autrement dit, la première borne de contact (la surface 52) fait partie d'une coulisse (la vis épaulée 41), et la deuxième borne de contact (la rondelle 51) fait partie d'un coulisseau (le surmoulage 22). Cependant, on peut envisager une construction inversée, c'est-à-dire que la première borne de contact peut faire partie d'un coulisseau, qui pourrait entourer et coulisser par rapport à la deuxième borne de contact qui ferait alors partie d'une coulisse.

En conséquence, la détection de la commande est réalisée dès que la platine 10 est déplacée, ce qui procure une détection très rapide, et cela permet de limiter la course (représentée par le jeu "j" sur la figure 1) de la platine à des valeurs très faibles, c'est-à-dire inférieures à 1 mm. Il est alors possible d'augmenter la raideur du ressort 31 pour limiter les vibrations, car la course est faible (donc l'effort élastique augmente peu le long de cette petite course), et il n'est même pas nécessaire d'atteindre la butée de fin de course pour déclencher l'avertisseur sonore.

En particulier, il est possible de prévoir une course inférieure ou égale à 1 mm et préférentiellement à 0.5 mm, voire inférieure ou égale à 0.3 mm. En conséquence, on peut prévoir au niveau des pièces d'habillage mobiles un jeu avec les pièces d'habillage statiques du volant inférieur aux valeurs rencontrées avec l'art antérieur. Pour l'art antérieur, on peut constater un jeu de 4mm environ, et l'invention permet donc de diminuer ce jeu à des valeurs inférieures à 2 mm, ce qui améliore la qualité perçue par le client.

En alternative, on peut prévoir le jeu "j" entre les pièces d'habillage mobiles et statiques.

On peut bien sûr prévoir plusieurs vis épaulées 41 (typiquement trois) pour guider la platine 20, afin de former plusieurs unités de positionnement ou plusieurs unités de butées, avec la possibilité de former au niveau de chaque unité de butée un interrupteur. On peut mettre tous ces interrupteurs en série, ou en parallèle d'un même circuit électrique avec un seul boîtier électronique 53, ou même prévoir un circuit électrique pour chaque interrupteur de chaque unité de butée avec un boîtier électronique 53 pour offrir plusieurs options de déclenchement de l'avertisseur sonore : dès qu'au moins un interrupteur est ouvert, au moins deux interrupteurs ouverts, ou la totalité des interrupteurs ouverts.

On peut remarquer dans ce mode de réalisation que les moyens de positionnement comprennent la tige de la vis épaulée 41 qui en vue de dessus bloque deux translations en X et Y, et la surface 52, qui bloque un degré de liberté en Z (axe la vis épaulée 41). ils comprennent aussi le surmoulage 22 qui bloque un degré de liberté de rotation. Par rapport aux figures 1 ou 2, il faut comprendre que les moyens de positionnement comprennent en outre par exemple un index ou un autre sous ensemble coulisse/coulisseau pour bloquer en vue de dessus une rotation autour de l'axe de la vis épaulée 41, ou axe Z.

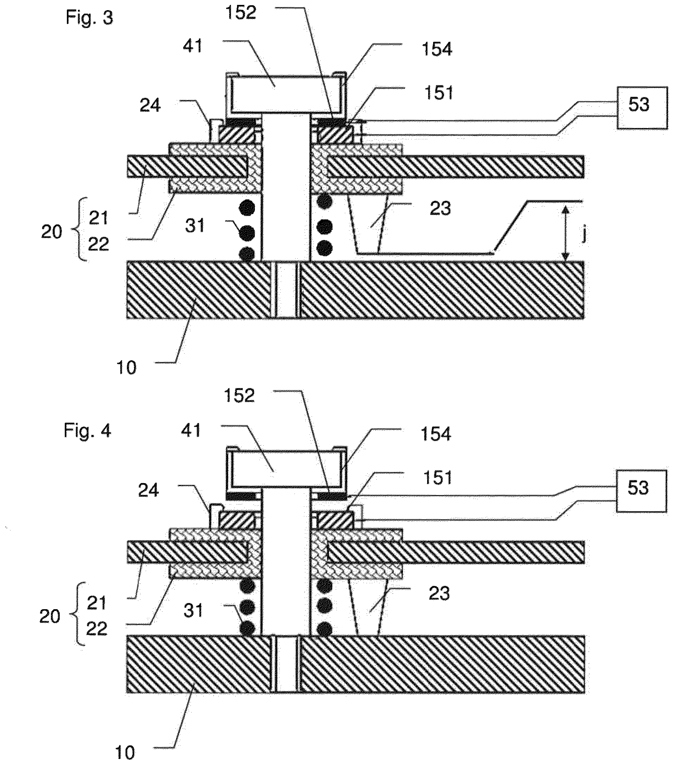

Les figures 3 et 4 représentent un deuxième mode de réalisation non couvert par l'invention revendiquée. Ce deuxième mode de réalisation ne diffère du premier mode de réalisation qu'au niveau du circuit électrique. Les éléments déjà décrits ne seront pas décrits à nouveau.

Dans le cas présent, le circuit électrique est formé par :
- une rondelle 151 embarquée sur la platine 20, et formant une deuxième borne de contact,
- une rondelle 152 solidaire de la vis épaulée 41, et formant une première borne de contact,
- le boîtier électronique 53 relié d'une part à la rondelle 151 et d'autre part à la rondelle 152.

Dans le cas présent, des moyens d'isolation sous forme d'une protection 154 sont intercalés entre la tête de la vis épaulée 41 et la rondelle 152. En conséquence, le circuit électrique ne comprend pas la vis épaulée 41, ni l'armature 10. De la même manière que pour la première mise en oeuvre ci-dessus, la première borne de contact et la deuxième borne de contact forment des moyens de butée et entrent en butée mécanique pour fermer le circuit électrique dès que la platine 20 retourne en position de repos (figure 3). Le contact est perdu dès que la platine est déplacée pour aller en position enfoncée (figure 4).

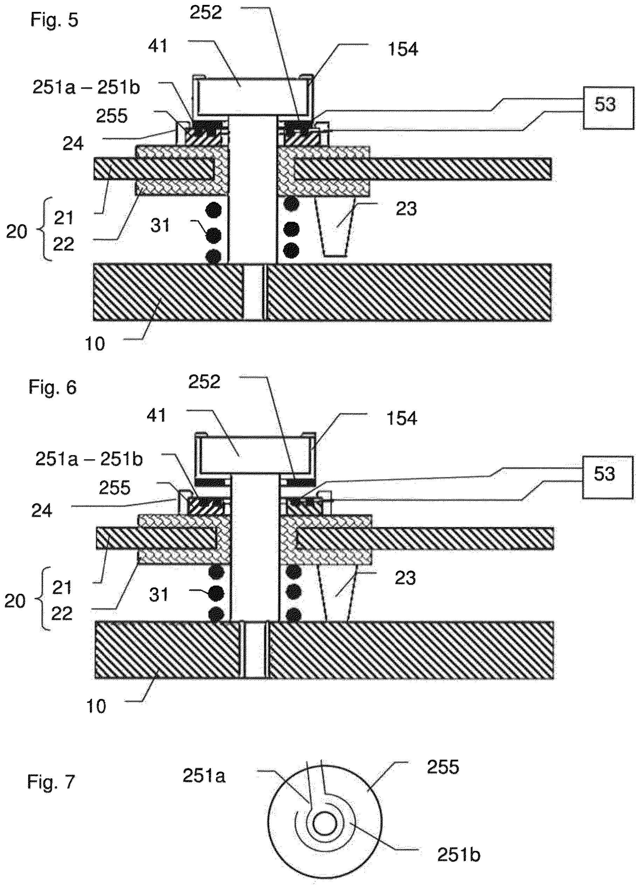

Les figures 5 à 7 représentent un troisième mode de réalisation non couvert par l'invention revendiquée. Ce troisième mode de réalisation ne diffère du deuxième mode de réalisation qu'au niveau du circuit électrique. Les éléments déjà décrits ne seront pas décrits à nouveau.

Dans le cas présent, le circuit électrique est formé par :
- deux pistes 251 a et 251b formées sur une rondelle isolante 255 embarquée sur la platine 20, et formant une deuxième borne de contact,
- une rondelle 252 solidaire de la vis épaulée 41, et formant une première borne de contact,
- le boîtier électronique 53 relié d'une part à la piste 251a et d'autre part à la piste 251b.

Dans le cas présent, des moyens d'isolation sous forme d'une protection 154 sont intercalés entre la tête de la vis épaulée 41 et la rondelle 252 d'une part, et entre les deux pistes de contact 251a et 251b (il s'agit de la rondelle isolante 255). En conséquence, le circuit électrique ne comprend pas la vis épaulée 41, ni l'armature 10. De la même manière que pour la première et deuxième mise en oeuvre ci-dessus, la première borne de contact et la deuxième borne de contact forment des moyens de butée et entrent en butée mécanique pour fermer le circuit électrique dès que la platine 20 retourne en position de repos (figure 5). Le contact est perdu dès que la platine 20 est déplacée pour aller en position enfoncée (figure 6). En particulier, la rondelle 252 contacte simultanément les pistes 251a et 251b, de sorte à conduire le courant de l'une à l'autre. Cette réalisation permet de simplifier le câblage de liaison avec le boitier électronique puisque le câblage n'est supporté que par une seule pièce, la platine 20.

Typiquement, l'avertisseur sonore est alimenté en courant fort (supérieur à 4 ampères), alors que le circuit électrique du dispositif de commande est alimenté en courant faible (inférieur à 1 ampère) pour limiter tout risque d'arc électrique entre la première borne de contact et la deuxième borne de contact.

La figure 7 représente une vue de dessus de la rondelle isolante 255, avec les deux pistes 251a et 251b, qui peuvent être imprimées, gravées ou collées sur la rondelle isolante 255.

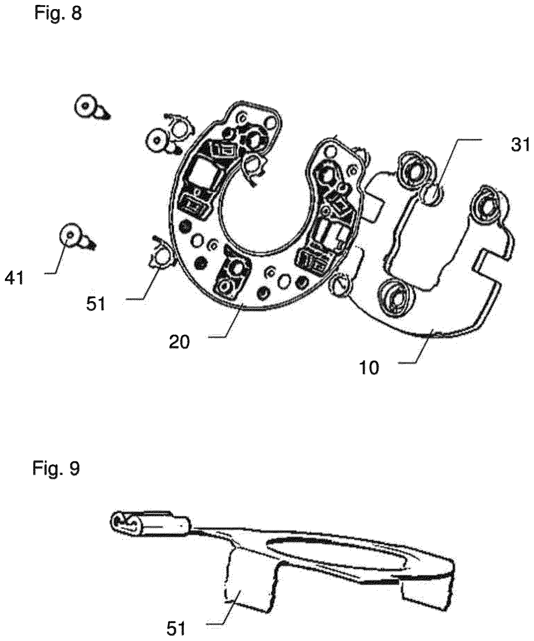

La figure 8 représente une vue éclatée du dispositif de commande de la figure 1, qui comprend au total trois unité de positionnement (ici des unités de butée), chacune comprenant une vis épaulée 41, une rondelle 51 et un ressort 31, afin de guider et mettre en butée et positionner la platine 20 par rapport à l'armature 10.

La figure 9 représente une vue de la rondelle 51, qui comprend une interface de connexion électrique, et deux pattes de clipsage pour se fixer sur la platine 20. En conséquence, on comprend que le dispositif de la figure 8 comprend trois unités de guidage avec chacune une première borne de contact (la vis épaulée 41), et une deuxième borne de contact (la rondelle 51), de sorte à former trois interrupteurs différents.

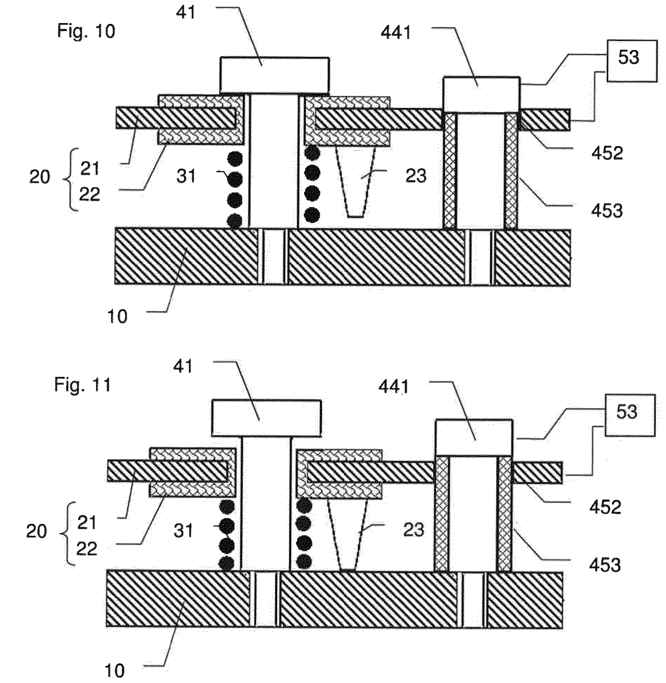

Les figures 10 et 11 représentent un quatrième mode de réalisation non couvert par l'invention revendiquée. Dans le cas représenté, la vis épaulée 41 ne forme que des moyens de butée, on constate qu'il existe un jeu entre la vis épaulée 41 et le surmoulage 22 de la platine 20. Dans ce mode de réalisation, une vis de positionnement épaulée 441 comprend un tube isolant 453 autour de sa partie cylindrique, et forme alors un plot de positionnement cylindrique qui coopère avec un alésage 452 de la platine 20 pour former des moyens de positionnement qui sont des moyens de guidage. En effet, dans ce mode de réalisation, la vis 441, le tube isolant 453 et l'alésage 452 de la plaque 21 coopèrent pour bloquer deux degrés de liberté de la platine 20 (deux translations X-Y, en vue de dessus), et la vis épaulée 41 bloque quant à elle un degré de liberté (la translation suivant son axe), alors que l'on voit du jeu entre le surmoulage 22 et la tige de la vis épaulée 41.

Dans le cas présent, le circuit électrique est formé par :
- la plaque 21 qui forme avec l'alésage 452 une deuxième borne de contact,
- la partie extrémale du plot de positionnement (la tête de la vis de positionnement épaulée 441) au niveau de sa surface cylindrique latérale qui forme une première borne de contact,
- le boîtier électronique 53 relié d'une part à la plaque 21 et d'autre part à la vis de positionnement épaulée 441. Autrement dit, les moyens de positionnement comprennent la première borne de contact (la tête de la vis 441) et la deuxième borne de contact (l'alésage 452 de la plaque 21). Les moyens de positionnement comprennent aussi le tube isolant 453.

Lorsque la platine 20 est en position de repos (figure 10), la première borne de contact et la deuxième borne de contact sont en contact électrique pour fermer le circuit électrique. Le contact est perdu dès que la platine 20 est déplacée pour aller en position enfoncée (figure 11). En conséquence, le boîtier électronique 53 détecte une ouverture du circuit électrique et peut commander le fonctionnement de l'avertisseur sonore.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif de commande d'avertisseur sonore de véhicule, agencé pour être embarqué sur un volant du véhicule, comprenant :
- une pièce de base (10),
- une pièce de commande (20), mobile par rapport à la pièce de base (10) entre une position de repos et une position enfoncée,
- des moyens de rappel élastiques (31), agencés pour repousser la pièce de commande (20) depuis la position enfoncée vers la position de repos,
- des moyens de positionnement (41), agencés pour imposer la position de repos à la pièce de commande (20),
- un circuit électrique avec au moins un interrupteur comprenant une deuxième borne de contact (51), embarquée sur la pièce de commande (20), et une première borne de contact (52), solidaire de la pièce de base (10),
le dispositif étant tel que les moyens de positionnement (41) comprennent la première borne de contact (52) qui est agencée pour positionner la pièce de commande (20) en position de repos, de sorte à fermer l'interrupteur lorsque la pièce de commande (20) est en position de repos,
et tel que les moyens de positionnement (41) sont des moyens de butée comprenant la première borne de contact (52) qui est agencée pour former une butée mécanique à la pièce de commande (20) rappelée en position de repos par les moyens de rappel,
et tel que les moyens de butée comprennent des moyens de guidage de la pièce de commande,
dans lequel les moyens de positionnement (41) comprennent une tige épaulée,
le dispositif étant **caractérisé en ce que** la pièce de commande forme une pièce support agencée pour recevoir un module de sécurité ou forme un couvercle ou un capot de module de sécurité, et **en ce que** la tige forme la première borne de contact (52), est conductrice de l'électricité et fait partie du circuit électrique.

2. Dispositif de commande selon la revendication 1, dans lequel les moyens de guidage sont tels que :
- la première borne de contact (52) fait partie d'une coulisse et
- la deuxième borne de contact (51) fait partie d'un coulisseau,
de sorte à guider la pièce de commande (20) rappelée en position de repos par les moyens de rappel.

3. Dispositif de commande selon l'une des revendications précédentes, dans lequel la pièce de base (10) est en matériau conducteur de l'électricité et fait partie du circuit électrique.

4. Dispositif de commande selon la revendication précédente, dans lequel la pièce de base (10) est agencée pour être isolée électriquement de la masse du véhicule

5. Dispositif de commande selon l'une des revendications précédentes, comprenant une pluralité d'interrupteurs ayant chacun une première borne de contact (52) et une deuxième borne de contact (51),
dans lequel les moyens de positionnement (41) comprennent une pluralité d'unités de positionnement,
dans lequel chaque unité de positionnement comprend une des premières bornes de contact (52).

6. Dispositif de commande selon l'une des revendications précédentes, dans lequel une course de la pièce de commande (20) entre la position de repos et la position enfoncée est inférieure à 1 mm.

7. Dispositif de commande selon l'une des revendications précédentes, dans lequel les moyens élastiques (31) sont agencés pour exercer un effort de rappel supérieur à 20N.

8. Volant de véhicule comprenant un dispositif de commande selon l'une des revendications précédentes.

9. Véhicule automobile comprenant un volant de véhicule selon la revendication précédente.

## Patentansprüche

1. Steuervorrichtung für eine Fahrzeughupe, die angeordnet ist, um an einem Fahrzeuglenkrad angebracht zu werden, umfassend:
- ein Basisstück (10),
- ein Steuerstück (20), das in Bezug auf das Basisstück (10) zwischen einer Ruheposition und einer eingedrückten Position bewegbar ist,
- elastische Rückstellmittel (31), die angeordnet sind, um das Steuerstück (20) aus der eingedrückten Position in die Ruheposition zurückzudrängen,
- Positionierungsmittel (41), die angeordnet sind, um dem Steuerstück (20) die Ruheposition aufzuzwingen,
- einen elektrischen Stromkreis mit mindestens einem Schalter, umfassend einen zweiten Kontaktanschluss (51), der an dem Steuerstück (20) angebracht ist, und einen ersten Kontaktanschluss (52), der mit dem Basisstück (10) fest verbunden ist,
wobei die Vorrichtung so ist, dass die Positionierungsmittel (41) den ersten Kontaktanschluss (52) umfassen, der angeordnet ist, um das Steuerstück (20) in der Ruheposition zu positionieren, so dass der Schalter geschlossen wird, wenn das Steuerstück (20) in der Ruheposition ist,
und so, dass die Positionierungsmittel (41) Anschlagmittel sind, umfassend den ersten Kontaktanschluss (52), der angeordnet ist, um einen mechanischen Anschlag für das Steuerstück (20) auszubilden, das durch die Rückstellmittel in die Ruheposition zurückgestellt wird,
und so, dass die Anschlagsmittel Mittel zum Führen des Steuerstücks umfassen,
wobei die Positionierungsmittel (41) eine gestufte Stange umfassen, wobei die Vorrichtung **dadurch gekennzeichnet ist, dass** das Steuerstück ein Trägerstück ausbildet, das angeordnet ist, um ein Sicherheitsmodul aufzunehmen, oder eine Abdeckung oder eine Haube für das Sicherheitsmodul ausbildet, und dass die Stange den ersten Kontaktanschluss (52) ausbildet, elektrisch leitfähig ist und zu dem elektrischen Stromkreis gehört.

2. Steuervorrichtung nach Anspruch 1, wobei die Führungsmittel so sind, dass:
- der erste Kontaktanschluss (52) zu einem Schieber gehört und
- der zweite Kontaktanschluss (51) zu einem Schieber gehört, um das zurückgestellte Steuerstück (20) durch die Rückstellmittel in die Ruheposition zu führen.

3. Steuervorrichtung nach einem der vorstehenden Ansprüche, wobei das Basisstück (10) aus elektrisch leitfähigem Material ist und zu dem elektrischen Stromkreis gehört.

4. Steuervorrichtung nach dem vorstehenden Anspruch, wobei das Basisstück (10) angeordnet ist, um von der Masse des Fahrzeugs elektrisch isoliert zu sein.

5. Steuervorrichtung nach einem der vorstehenden Ansprüche, umfassend eine Vielzahl von Schaltern, die jeweils einen ersten Kontaktanschluss (52) und einen zweiten Kontaktanschluss (51) besitzen, wobei die Positionierungsmittel (41) eine Vielzahl von Positionierungseinheiten umfassen, wobei jede Positionierungseinheit einen der ersten Kontaktanschlüsse (52) umfasst.

6. Steuervorrichtung nach einem der vorstehenden Ansprüche, wobei ein Weg des Steuerstücks (20) zwischen der Ruheposition und der eingedrückten Position kleiner als 1 mm ist.

7. Steuervorrichtung nach einem der vorstehenden Ansprüche, wobei die elastischen Mittel (31) angeordnet sind, um eine Rückstellwirkung auszuüben, die größer als 20 N ist.

8. Fahrzeuglenkrad, umfassend eine Steuervorrichtung nach einem der vorstehenden Ansprüche.

9. Kraftfahrzeug, umfassend ein Fahrzeuglenkrad nach dem vorstehenden Anspruch.

## Claims

1. Vehicle horn control device, designed to be installed on a steering wheel of the vehicle, comprising:
- a base component (10),
- a control component (20), which is movable with respect to the base component (10) between a rest position and a depressed position,
- resilient return means (31), designed to push back the control component (20) from the depressed position to the rest position,
- positioning means (41), designed to impose the rest position on the control component (20),
- an electrical circuit having at least one switch comprising a second contact terminal (51), installed on the control component (20), and a first contact terminal (52), secured to the base component (10),
the device being such that the positioning means (41) comprise the first contact terminal (52) which is designed to position the control component (20) in the rest position, so as to close the switch when the control component (20) is in the rest position,
and such that the positioning means (41) are stop means comprising the first contact terminal (52) which is designed to form a mechanical stop for the control component (20) returned to the rest position by the return means,
and such that the stop means comprise means for guiding the control component,
wherein the positioning means (41) comprise a shouldered rod, the device being **characterized in that** the control component forms a support component which is designed to receive a safety module or forms a cover or hood for a safety module, **and in that** the rod forms the first contact terminal (52), is electrically conductive and is part of the electrical circuit.

2. Control device according to claim 1, wherein the guiding means are such that:
- the first contact terminal (52) is part of a slider and
- the second contact terminal (51) is part of a slide, so as to guide the control component (20) returned to the rest position by the return means.

3. Control device according to either of the preceding claims, wherein the base component (10) is made of an electrically conductive material and is part of the electrical circuit.

4. Control device according to the preceding claim, wherein the base component (10) is designed to be electrically insulated from the body of the vehicle.

5. Control device according to any of the preceding claims, comprising a plurality of switches each having a first contact terminal (52) and a second contact terminal (51), wherein the positioning means (41) comprise a plurality of positioning units, wherein each positioning unit comprises one of the first contact terminals (52).

6. Control device according to any of the preceding claims, wherein a displacement of the control component (20) between the rest position and the depressed position is less than 1 mm.

7. Control device according to any of the preceding claims, wherein the resilient means (31) are designed to exert a return force greater than 20 N.

8. Vehicle steering wheel comprising a control device according to any of the preceding claims.

9. Motor vehicle comprising a vehicle steering wheel according to the preceding claim.
